# FASCICULE DE BREVET EUROPEEN

(11) **EP 0 458 952 B1**
(45) Date de publication et mention de la délivrance du brevet: **27.07.1994**
(21) Numéro de dépôt: 91901805.1
(22) Date de dépôt: 18.12.1990
(51) Int. Cl.: C02F 1/72, B01J 31/18, C10G 27/10

(54) **PROCEDE CATALYTIQUE DE DEGRADATION OXYDATIVE D'EFFLUENTS AQUEUX CONTENANT DES COMPOSES HYDROCARBONES TOXIQUES**
KATALYTISCHER ABBAU GIFTIGER KOHLENWASSERSTOFFE IM ABWASSER
CATALYTIC METHOD FOR DEGRADING AQUEOUS EFFLUENT CONTAINING TOXIC HYDROCARBON COMPOUNDS BY OXIDATION

(30) Priorité: 18.12.1989 FR 8916690
(43) Date de publication de la demande: 04.12.1991
(73) Titulaire: SOCIETE NATIONALE ELF AQUITAINE, 92400 Courbevoie (FR); ELF ATOCHEM S.A., 92800 Puteaux (FR)
(72) Inventeur: MEUNIER, Bernard, F-31320 Castanet Tolosan (FR); LABAT, Gilles, F-31400 Toulouse (FR); SERIS, Jean-Louis, F-64110 Jurançon (FR)
(74) Mandataire: Boillot, Marc
(86) Numéro de dépôt international: FR9000919
(87) Numéro de publication internationale: WO9108985

(56) Documents cités:
- EP-A- 0 350 395
- WO-A-90/06955
- DE-A- 1 212 903
- DE-A- 2 441 648
- Journal of Membrane Science, vol. 28, août 1986, Elsevier Sci. Publ.BV., (Amsterdam, NL), C.C. Wamser et al.:"Preparation and properties of porhyrin-modified hollow-fiber membranes for use as heterogeneous photosensitizers for singlet oxygen and for artificial photosynthesis" , pages 31-46 see pages 40-42, "photooxygenation studies"
- J. Am. Chem. Soc., vol. 110, no.4, 1988, American Chemical Society, T.Okamoto et al. :"Biomimetic Oxydatin with molecular oxygen. Selective carbon-carbon bond cleavage of ,2-diols by molecular oxygen and dihydropyridine in the presence of iron-porphyrin catalysts" pages 1187-1196

## Description

L'invention a pour objet un procédé catalytique de dégradation oxydative d'effluents aqueux contenant des composés hydrocarbonés cycliques réputés pour leur toxicité.

Les résidus aromatiques, chlorés notamment, sont réputés pour être difficilement oxydables et peu biodégradables.

Les techniques de traitement d'effluents contenant de tels résidus font appel soit à des catalyseurs à base d'oxyde de manganèse ou d'oxyde de cuivre CuO impliquant des conditions opératoires drastiques (température, pression), soit à des processus sophistiqués, par exemple la photocatalyse.

L'invention a pour but de proposer un procédé de traitement de tels effluents, facile à mettre en oeuvre et permettant d'atteindre rapidement des rendements de transformation des composés hydrocarbonés cycliques élevés.

La présente invention a pour objet un procédé de traitement par dégradation oxydative d'effluents contenant des composés hydrocarbonés mono ou polycycliques saturés, insaturés ou aromatiques, réputés pour leur toxicité, caractérisé en ce qu'il est réalisé en présence d'un catalyseur constitué d'une méso-tétraphénylporphyrine métallée hydrosoluble associée à un peroxyde hydrosoluble, agent donneur d'oxygène.

Les effluents traités pourront contenir toutes sortes de composés hydrocarbonés cycliques réputés toxiques, tels que, par exemple, les aromatiques polycondensés, les aromatiques chlorés, les aromatiques polycycliques chlorés, les hydrocarbures aliphatiques cycliques chlorés et les hydrocarbures aromatiques hydroxylés ou alkoxylés.

Ces composés pourront, par exemple, être :
- le benzo(a) pyrène, le pyrène, l'anthracène, le phénanthrène, le benzanthracène,
- le 4-hydroxy-3-méthoxy benzaldéhyde
- le 7-hydroxy-4-méthyl coumarine
- le Pyrrogallol
- le 3,4-diméthylcatéchol
- la vanilline
- le 2, 4, 6-trichlorophénol
- le 4, 5-dichloroguaïacol
- le 4, 5, 6-trichloroguaïacol
- la 3, 4-dichloroaniline
- le 2, 4-dichlorophénol
- le 2, 4, 5-trichlorophénol
- le pentachlorophénol
- le DDT : 1,1-bis (4-chlorophényl) - 2, 2, 2-trichloroéthane
- l'Arochlor 1254
- la 2, 3, 7, 8-tetrachlorodibenzo-p-dioxine
- le 3, 4, 3', 4'-tetrachlorobiphényl
- le 2, 4, 5, 2', 4', 5'-hexachlorobiphényl
- le lindane : 1, 2, 3, 4, 5, 6-hexachlorocyclohexane
La porphyrine utilisable dans le procédé de l'invention sera de préférence métallée avec le fer ou le manganèse.

Cette porphyrine est méso tétraphényle substituée et son caractère hydrosoluble sera préférence conférée par au moins un substituant présentant ce caractère, par exemple une fonction sulfonate, placé en position 3, 4 ou 5 de ces noyaux phényles.

De manière préférée, les noyaux phényles de ces porphyrines méso substituées seront porteurs en positions 2 et 6 de substituants tels que des halogènes ou radicaux hydrocarbonés alkyles, ayant de 1 à 6 atomes de carbone ou aryles, qui éviteront la formation dans le milieu réactionnel oxydant d'entités µ-oxo qui peuvent entraîner une désactivation du catalyseur ou même sa destruction.

Des procédés de synthèse de telles porphyrines ont été décrits par R.W. Wagner, J.S. Lindsey et al. Tetrahedron Lett, 28, 3069-3070 ; 1987 et par la demanderesse dans une demande de brevet français pendante déposée le 10.8.1989 sous le n^{o}89.10762.

Le procédé de l'invention pourra être mis en oeuvre en catalyse hétérogène. La porphyrine est fixée à un support insoluble de type résine. Celui-ci pourra, par exemple, être un polymère porteur de fonctions pyridine ou imidazole qui sera particulièrement bien adapté à un processus utilisant une porphyrine de manganèse.

Le processus d'oxydation du procédé implique la présence d'un peroxyde hydrosoluble, agent donneur d'oxygène. Ce peroxyde sera inorganique ou organique.

A titre d'exemple de peroxydes convenant au procédé de l'invention, on peut citer : les peracides inorganiques, tels que H₂O₂ ou KHSO₅ ; les peracides organiques : MMPP (sel de magnesium de l'acide monoperphtalique) par exemple ; les alkylhydroperoxydes : t-Bu-OOH, par exemple.

Le procédé de l'invention est mis en oeuvre, en milieu aqueux, à un pH acide généralement inférieur ou égal à 6 et de préférence inférieur à 4.

Par ailleurs, il sera avantageux d'utiliser un milieu réactionnel constitué d'un mélange d'eau et d'acétonitrile ayant une teneur en acétonitrile comprise entre 5 et 70% en volume et de préférence, entre 20 et 50%.

Le procédé de l'invention sera mieux compris à la lecture des exemples ci-après. Les exemples 1-6, 10-16 et 21-22 sont à titre comparatif.

Les porphyrines utilisées dans les exemples ci-après:
a/ Fe TPPS, Fe-méso-tétraphénylporphyrine sulfonée
b/ Fe TMPS, Fe-méso- tétramésitylporphyrine sulfonée
c/ Fe TDCPS, Fe-méso-tétrakis 2-6 dichlorophényl porphyrine sulfonée
d/ Fe TPPS-Ad, porphyrine a/ fixée sur un support de résine Amberlite (R)
e/ Fe TPPS-Ad, porphyrine a/ fixée sur un support polyvinyl pyridinium (support 2)
f/ Fe TMPS-Ad, porphyrine b/ fixée sur support Amberlite (R)
g/ Mn TPPS, Mn-mésotetraphénylporphyrine sulfonée
h/ Mn TMPS-Ad(N), _ Mn-mésotétramesitylporphyrine sulfonée fixée sur support 2
ont été synthétisées selon les procédés décrits dans la demande de brevet européen 89 401 920.7 déposée le 5.7.89 par la demanderesse.

### Exemples 1 à 10 :

Le composé modèle de ces exemples est le 2,4,6-trichlorophénol, nommé ci-après substrat, compose aromatique présent en quantité importante dans les effluents lors du traitement de la pâte à papier par des procédés au chlore.

Les conditions générales des essais catalytiques effectués sur le 2,4,6-trichlorophénol entraînant la formation de quinone : 2,6-dichloro-1,4-benzoquinone qui est suivie par HPLC analytique C18, éluant méthanol/eau, 50/50, avec détection à 280 nm, sont les suivantes :
Exemple 1 :
Substrat (20 µmol, 500 µl d'une solution d'acétonitrile à 40 mM en 2,4,6-trichlorophénol) ; FeTPPS (60 nmol, 50 µl d'une solution de porphyrine de fer à 1.2 mM tamponnée à pH = 3.0) ; tampon citrate-phosphate 0.1 M (pH=3.0) ; KHSO₅ (100 mol, 30.7 mg dans 500 µl de tampon pH 3.0)
Exemple 2 :
Mêmes conditions expérimentales que pour l'exemple 1.
Remplacement de KHSO₅ par H₂O₂ (12 µl de H₂O₂ à 8.6 M dans 500 µl de tampon citrate-phosphate 0.1 M pH 3.0).
Exemple 3 :
Mêmes conditions expérimentales que pour l'exemple 1.
FeTPPS à 0.1% catalyseur/substrat (17 µl d'une solution de porphyrine de fer à 1.2 mM tamponnée à pH = 3.0).
Exemple 4 :
Mêmes conditions expérimentales que pour l'exemple 1.
Remplacement de FeTPPS par FeTMPS.
Exemple 5 :
Mêmes conditions expérimentales que pour l'exemple 4.
Modifications du pH (pH=6.0, tampon phosphate 0.5 M).
Exemple 6 :
Mêmes conditions expérimentales que pour l'exemple 4.
Remplacement de FeTMPS par FeTDCPS.
Exemple 7 :
Mêmes conditions expérimentales que pour l'exemple 2.
Remplacement de FeTPPS par FeTPPS-Ad (100 mg de support 1 ; 2 µmol de porphyrine de fer fixée).
Exemple 8 :
Mêmes conditions expérimentales que pour l'exemple 7.
Remplacement de FeTPPS-Ad par FeTPPS-Ad (N) (100 mg de support 2 ; 2 µmol de porphyrine de fer fixée).
Exemple 9 :
Mêmes conditions expérimentales que pour l'exemple 7.
Remplacement de FeTPPS-Ad par FeTMPS-Ad (100 mg de support 1 ; 2 µmol de porphyrine de fer fixée).
Exemple 10 :
Mêmes conditions expérimentales que pour l'exemple 5.
Remplacement de FeTMPs par MnTPPS (2 µmol ; 3 mg de porphyrine de manganèse dissous dans 500 µl de tampon pH=6.0). Addition de 100 équivalents de 4 -tert-butylpyridine/catalyseur (200 µmol ; 28 µl).
Les résultats obtenus sont résumés dans le tableau 1.

**Tableau 1**

| Ex. | Catalyseur | %cata /sub | pH | Donneur d'oxygène | Conversion (%) | |
|---|---|---|---|---|---|---|
| | | | | | 1min | 15min |
| 1 | FeTPPS | 0,3 | 3,0 | KHSO₅ | 95 | 100 |
| 2 | FeTPPS | 0,3 | 3,0 | H₂O₂ | 2 | 75 |
| 3 | FeTPPS | 0,1 | 3,0 | KHSO₅ | 90 | 100 |
| 4 | FeTMPS | 0,3 | 3,0 | KHSO₅ | 95 | 100 |
| 5 | FeTMPS | 0,3 | 6,0 | KHSO₅ | 40 | 60 |
| 6 | FeTDCPS | 0,3 | 3,0 | KHSO₅ | 92 | 100 |
| 7 | FeTPPS-Ad | 10 | 3,0 | KHSO₅ | 15 | 45 |
| 8 | FeTPPS-Ad(N) | 10 | 3,0 | KHSO₅ | 25 | 55 |
| 9 | FeTMPS-Ad | 10 | 3,0 | KHSO₅ | 20 | 50 |
| 10 | MnTPPS | 10 | 6,0 | KHSO₅ | 30 | 60 |

Les meilleurs taux de conversion sont obtenus en catalyse homogène à pH acide (pH3) en utilisant le persulfate de potassium comme agent donneur d'oxygène (l'exemple 3 illustre un taux de conversion de 100% en dépit d'une teneur en catalyseur faible).

Les porphyrines de manganèse libres ou supportées, agissant à pH=6.0, ne permettent pas de synthétiser la 2,6-dichloro-1,4-benzoquinone, la polymérisation des produits formés étant la voie préférentielle à ce pH.

### Exemples 11 à 15

Les essais catalytiques suivants illustrent clairement l'application aisée du système catalytique présenté : FeTPPS avec divers agents oxydants : KHSO₅, H₂O₂, MMPP et t-BuOOH (FeTPPS à 0.1 ou 0.3% catalyseur/substrat).
Les essais catalytiques suivants sont effectués dans un mélange homogène composé d'acétonitrile et d'eau tamponnée à pH=3.0 (40/60, v/v), menés à température ambiante, avec un temps de réaction de 5 minutes. Le mélange est enrichi en acétonitrile par rapport aux essais précédemment réalisés afin de solubiliser le substrat en quantité plus importante. L'isolement des produits quinoniques formés est réalisé par extraction successive au dichlorométhane de la phase aqueuse. Une purification sur gel de silice 60 (70 - 230 mesh (Merck) ; éluant : dichlorométhane/hexane, 80/20, v/v), et une précipitation par l'hexane sont effectuées sur le produit quinonique formé. Les quinones sont analysées et identifiées par RMN 200 MHz et ¹H et en ¹³C.
Les conditions expérimentales des essais (tous les essais sont effectués sur 6 millimoles de substrat) sont précisées ci-après.
Exemple 11 :
   Substrat : 2,4,6-trichlorophénol (6 mmol ; 1,185 g) ; acétonitrile (40 ml) ; tampon citrate-phosphate 0.1 M pH = 3.0 (50 ml) ; FeTPPS (18 µmol ; 21 mg) ; solution oxydante (0.72 M en KHSO₅ ; 2.2 g de KHSO₅, 7.2 mmol) dissous dans 10 ml de tampon citrate-phosphate 0.1 M. On observe la conversion totale du substrat en moins de 30 minutes. Le principal produit obtenu est la 2,6-dichloro-1,4-benzoquinone (585 mg ; Rdt = 55%).
   Acétylation de la quinone : 100 mg de quinone (0.564 mmol) sont traités par 1 équivalent de sodium dithionite (100 mg, 0.564 mmol) dans un mélange acétonitrile/eau tamponnée à pH=3.0 (25/75, v/v) pendant 15 minutes (suivi de la réaction par HPLC). Le produit réduit est extrait au dichlorométhane. Après réduction du volume réactionnel, on additionne 500 l d'anhydride acétique (8 éq) et 20 mg de diméthylaminopyridine (DMAP) (0.5 eq), la réaction est immédiate. On effectue alors un lavage de la phase dichlorométhane avec une solution saturée de NaHCO₃, puis on effectue un lavage à l'eau. Cette opération est répétée deux à trois fois. Après séchage de la phase dichlorométhane, on réalise une purification sur gel de silice 60 (70-230 mesh ; éluant : dichlorométhane), et une précipitation dans un mélange dichlorométhane/hexane (5/95, v/v) ; le produit est alors séché sous vide. RMN¹H(250MHz ; CDCl₃) : ppm 2.27 (s, 3H, O-C-CH₃), 2.37 (s, 3H, O-C-CH₃), 7.15 (s, 2H).
Exemple 12 :
   Mêmes conditions expérimentales que pour l'exemple 11.
   Utilisation de H₂O₂, comme donneur d'oxygène (7.2 mmol ; 1.2 ml d'une solution 8.6 M).La conversion totale du substrat a été atteinte en 30 minutes et parmi les produits de la réaction on obtenait : 320 mg de quinone, soit un rendement
   de 30%.
Exemple 13 :
   Mêmes conditions expérimentales que pour l'exemple 11.
   Utilisation de MMPP, comme donneur d'oxygène (7.2 mmol ; 1.8 g). Conversion totale du substrat en moins de 30 minutes et obtention de quinone : 363 mg, Rdt=34%.
Exemple 14 :
   Mêmes conditions expérimentales que pour l'exemple 11.
   Utilisation de t-BuOOH, comme donneur d'oxygène (solution 70% dans l'eau, 7.2 mmol ; 670 µl). Conversion du substrat en 30 minutes environ et obtention de quinone : 107 mg, Rdt=10%.
Exemple 15 :
   Substrat 5-chloro-1.3-diméthoxybenzène (6 mmol ; 1.03 g). Mêmes conditions expérimentales que l'exemple 11.
   Conversion du substrat en 30 minutes environ et obtention de 2-chloro-6-méthoxy-1.4-benzoquinone (290 mg, Rdt=28%).
   Les exemples précédents démontrent l'efficacité des porphyrines de fer en présence d'oxydant comme le monopersulfate de potassium KHSO₅ et l'eau oxygénée H₂O₂ à réaliser une déchlorination oxydative du 2,4,6-trichlorophénol (exemples 1,2 et 3). Des porphyrines de fer plus encombrées en position ortho sur les noyaux phényles portés en position méso du cycle sont toutes aussi actives à pH=3.0 (exemples 4, 5 et 6). Les porphyrines de fer supportées sont moins actives que les porphyrines libres en solution (on note toutefois 36% de produit quinonique formé en 15 min, avec FeTMPS-Ad).
   Dans les exemples 11 à 15, on peut noter l'efficacité du système FeTPPS libre en solution associée aux donneurs d'oxygène KHSO₅, H₂O₂, MMPP et t-BuOOH sur un substrat chloré (100% de conversion du substrat en moins de trente minutes).

### Exemples 16 à 22 :

Ces exemples illustrent l'utilisation des systèmes catalytiques du procédé de l'invention sur divers substrats : aromatiques polycondensés, aromatiques polycycliques chlorés, hydrocarbures aliphatiques cycliques chlorés aussi bien en catalyse homogène qu'en catalyse hétérogène.
Les conditions générales de ces essais catalytiques étaient les suivantes :
Exemple 16 :
Substrat : Benzo(a)pyrène (0,1 mmole ; 25,2 mg) ; acétonitrile (15 ml) ; tampon citrate-phosphate 0,1 M (20 ml) pH 3 ; FeTPPS ( 1 µmole ; 1,4 mg) ; solution oxydante (150 mg de KHSO5 dissous dans 10 ml de tampon citrate-phosphate 0,1 M). Après cinq minutes de réaction, le produit formé (100% de conversion) est extrait au dichlorométhane. Le produit quinonique présente en UV visible une bande d'absorption à 265 nm et 2 bandes à 420 nm et 450 nm. L'analyse en spectrométrie de masse DCI/NH₃ donne un pic intense à 283 (2 fonctions carbonyles présentes sous formes quinoniques).
Exemple 17 :
Substrat (20 µmoles, 50 µmoles d'une solution d'acétonitrile à 40 mM en 2, 4, 6-trichlorophénol ; FeTMPS-Ad (2 µmoles ; 100 mg de résine) ; 1 ml de tampon phosphate 0,5 M (pH = 6,0) ; KHSO₅ (100 µmoles, 30,7 mg dans 500 µl de tampon pH 6,0). Prise d'échantillon de 20 µl de mélange réactionnel : analyse UV visible dans l'acétonitrile (cuve 1 ml et de 1 cm de trajet optique).
Exemple 18 :
Mêmes conditions expérimentales que pour l'exemple 17.
Remplacement de FeTMPS-Ad par MnTMPS-Ad(N) (2 µmoles ; 100 mg de résine).
Exemple 19 :
Mêmes conditions expérimentales que pour l'exemple 17.
Remplacement du 2, 4, 6-trichlorophénol par du benzo(a)pyrène.
Exemple 20 :
Mêmes conditions expérimentales que pour l'exemple 19.
Remplacement de FeTMPS-Ad par MnTMPS-Ad(N) (2 µmoles ; 100 mg de résine).
Exemple 21 :
Mêmes conditions expérimentales que pour l'exemple 16.
Substrat : Lindane (γ-hexachlorocyclohexane) (0,1 mmole ; 29 mg). La conversion du substrat est de 100% après 60 min. L'analyse en spectrométrie de masse en DCI/NH₃ donne plusieurs fragments à 107, 130, 137, 146, 180). L'analyse en infra-rouge indique des fréquences relatives à des fonctions C=O (1715 cm⁻¹) ou acide (1715 cm⁻¹ et C-O à 1100-1024 cm⁻¹).
Exemple 22 :
Mêmes conditions expérimentales que pour l'exemple 16.
Substrat : DDT (0,1 mmole ; 35,4 mg) ; après 60 min. la conversion est de 100%. L'analyse en infra-rouge indique plusieurs produits d'oxydation comportant des bandes C=O à 1640 cm⁻¹ et à 1715 cm⁻¹, des bandes C=C=C à 1900-1950 cm⁻ ¹.
Les résultats obtenus sont résumés dans le tableau II.

**Tableau II**

| Ex. | Substrat | Catalyseur | pH | Conversion | |
|---|---|---|---|---|---|
| | | | | 15min | 60min |
| 16 | Benzopyrène | Fe TPPS | 3 | 100 | - |
| 17 | Trichlorophénol | Fe TMPS-Ad | 6 | 45 | 100 |
| 18 | Trichlorophénol | Mn TMPS-Ad | 6 | 45 | 100 |
| 19 | Benzopyrène | Fe TMPS-Ad | 6 | 18 | 65 |
| 20 | Benzopyrène | Mn TMPS-Ad(N) | 6 | 25 | 69 |
| 21 | Lindane | Fe TPPS | 3 | - | 100 |
| 22 | DDT | Fe TPPS | 3 | - | 100 |

L'oxydation du benzo(a)pyrène par le système FeTPPS 1%/catalyseur/KHSO₅ conduit en quelques minutes à la conversion totale du benzo(a)pyrène en un produit quinonique (exemple 16). Les exemples 17 à 20 montrent que la conversion du 2,4,6-trichlorophénol et du benzo(a) pyrène peut être réalisée à un pH sensiblement neutre (pH6) et en catalyse hétérogène, en atteignant de bonnes performances. Ceci est particulièrement intéressant pour un traitement industriel de tels effluents aqueux. Les exemples 21 et 22 illustrent l'application du procédé de l'invention au traitement d'effluents aqueux contenant des composés hydrocarbonés chlorés aromatiques ou cycloaliphatiques.

## Revendications

1. Procédé de catalyse hétérogène pour le traitement par dégradation oxydative d'effluents aqueux contenant des composés hydrocarbonés mono ou polycycliques saturés, insaturés ou aromatiques, réputés pour leur toxicité, caractérisé en ce qu'il est réalisé en présence d'un catalyseur solide constitué d'une méso tétraphénylporphyrine métallée hydrosoluble fixée sur un support insoluble de type résine et d'un peroxyde hydrosoluble.

2. Procédé selon la revendication 1, caractérisé en ce que la porphyrine est métallée avec le fer ou le manganèse.

3. Procédé selon l'une des revendications 1 et 2, caractérisé en ce que les noyaux phényles de la porphyrine comportent au moins un substituant à caractère hydrosoluble en position 3,4 ou 5.

4. Procédé selon la revendication 3, caractérisé en ce que les noyaux phényles de la porphyrine comportent en position 2 et 6 des substituants choisis parmi les halogènes et les radicaux hydrocarbonés alkyles ayant de 2 à 6 atomes de carbone et aryles.

5. Procédé selon l'une des revendications 1 à 4, caractérisé en ce que le support insoluble de type résine est un polymère porteur de fonctions pyridine ou imidazole.

6. Procédé selon l'une des revendications 1 à 5, caractérisé en ce que le peroxyde est choisi parmi les peroxydes inorganiques, les peroxydes organiques ou les alkylhydroperoxydes.

7. Procédé selon l'une des revendications 1 à 5, caractérisé en ce qu'il est mis en oeuvre à un pH inférieur ou égal à 6.

8. Procédé selon l'une des revendications 1 à 6, caractérisé en ce que le milieu réactionnel contient de 5 à 70% en volume d'acétonitrile.

9. Procédé selon l'une des revendications 1 à 7, caractérisé en ce que l'effluent traité contient des aromatiques polycondensés comme le benzo(a)pyrène.

10. Procédé selon l'une des revendications 1 à 7, caractérisé en ce que l'effluent traité contient des hydrocarbures cycliques chlorés comme le 2,4,6-trichlorophénol et le lindane.

## Claims

1. Process of heterogenous catalysis for the treatment, by means of oxidative decomposition, of aqueous effluents containing saturated, unsaturated or aromatic mono or polycyclic hydrocarbon compounds, known for their toxicity, characterised in that it is performed in the presence of a solid catalyst consisting of a hydrosoluble metallised mesotetraphenylporphyrin fixed on an insoluble resin support, and of a hydrosoluble peroxide.

2. Process according to Claim 1, characterised in that the porphyrin is metallised with iron or manganese.

3. Process according to either one of Claims 1 and 2, characterised in that the phenyl nuclei of the porphyrin comprise at least one hydrosoluble substituent in position 3, 4 or 5.

4. Process according to Claim 3, characterised in that the phenyl nuclei of the porphyrin comprise, in positions 2 and 6, substituents selected from halogens and alkyl hydrocarbon radicals comprising 2 to 6 carbon atoms and aryls.

5. Process according to any one of Claims 1 to 4, characterised in that the insoluble resin support is a polymer carrying pyridine or imidazole groups.

6. Process according to one of Claims 1 to 5, characterised in that the peroxide is selected from inorganic peroxides, organic peroxides or alkylhydroperoxides.

7. Process according to any one of Claims 1 to 5, characterised in that it is performed at a pH of less than or equal to 6.

8. Process according to any one of Claims 1 to 6, characterised in that the reactive medium contains from 5 to 70 % by volume of acetonitrile.

9. Process according to any one of Claims 1 to 7, characterised in that the treated effluent contains polycondensed aromatics such as benzo(a)pyrene.

10. Process according to any one of Claims 1 to 7, characterised in that the treated effluent contains chlorinated cyclical hydrocarbons such as 2,4,6-trichlorophenol and lindane.

## Patentansprüche

1. Verfahren der heterogenen Katalyse für die Behandlung von wässerigen Abwässern, die für ihre Toxizität bekannte gesättigte, ungesättigte oder aromatische mono- oder polycyclische Kohlenwasserstoffverbindungen enthalten, durch oxydativen Abbau, dadurch **gekennzeichnet,** daß man das Verfahren in Anwesenheit eines festen Katalysators durchführt, der aus einem auf einem unlöslichen Träger vom Harztyp fixierten wasserlöslichen metallisierten meso-Tetraphenylporphyrin und einem wasserlöslichem Peroxid besteht.

2. Verfahren nach Anspruch 1, dadurch **gekennzeichnet,** daß das Porphyrin mit Eisen oder Mangan metallisiert ist.

3. Verfahren nach einem der Ansprüche 1 oder 2, dadurch **gekennzeichnet,** daß die Phenylkerne des Porphyrins in 3-, 4- oder 5-Stellung wenigstens einen wasserlöslichen Substituenten enthalten.

4. Verfahren nach Anspruch 3, dadurch **gekennzeichnet,** daß die Phenylkerne des Porphyrins in 2- und 6-Stellung Substituenten, ausgewählt unter Halogenen, C₂₋₆-Alkylkohlenwasserstoffresten und Arylen, enthalten.

5. Verfahren nach einem der Ansprüche 1 bis 4, dadurch **gekennzeichnet,** daß der unlösliche Träger vom Harztyp ein Trägerpolymer mit Pyridin- und Imidazolfunktionen ist.

6. Verfahren nach einem der Ansprüche 1 bis 5, dadurch **gekennzeichnet,** daß das Peroxid ausgewählt wird unter anorganischen Peroxiden, organischen Peroxiden oder Alkylhydroperoxiden.

7. Verfahren nach einem der Ansprüche 1 bis 5, dadurch **gekennzeichnet,** daß es bei einem pH von 6 oder darunter durchgeführt wird.

8. Verfahren nach einem der Ansprüche 1 bis 6, dadurch **gekennzeichnet,** daß das Reaktionsmedium 5 bis 70 Vol.-% Acetonitril enthält.

9. Verfahren nach einem der Ansprüche 1 bis 7, dadurch **gekennzeichnet,** daß das behandelte Abwasser polykondensierte Aromate wie Benzo(a)pyren enthält.

10. Verfahren nach einem der Ansprüche 1 bis 7, dadurch **gekennzeichnet,** daß das behandelte Abwasser cyclische Chlorkohlenwasserstoffe wie 2,4,6-Trichlorphenol und Lindan enhält.
